# EUROPÄISCHE PATENTSCHRIFT

(11) **EP 1 027 227 B1**
(45) Veröffentlichungstag und Bekanntmachung des Hinweises auf die Patenterteilung: **10.04.2002**
(21) Anmeldenummer: 98954473.9
(22) Anmeldetag: 02.11.1998
(51) Int. Cl.: B60Q 1/14

(54) **EINRICHTUNG ZUR BEEINFLUSSUNG EINER BELEUCHTUNGSEINRICHTUNG**
DEVICE FOR INFLUENCING A LIGHTING INSTALLATION
DISPOSITIF POUR INFLUER SUR UN APPAREIL D'ECLAIRAGE

(30) Priorität: 03.11.1997 DE 19748454
(43) Veröffentlichungstag der Anmeldung: 16.08.2000
(73) Patentinhaber: Valeo Auto-Electric Wischer und Motoren GmbH, 74321 Bietigheim-Bissingen (DE)
(72) Erfinder: Reime, Gerd, D-75328 Schömberg (DE)
(74) Vertreter: Dreiss, Fuhlendorf, Steimle & Becker
(86) Internationale Anmeldenummer: EP9806912
(87) Internationale Veröffentlichungsnummer: WO9922961

(56) Entgegenhaltungen:
- DE-A- 19 523 262
- DE-A- 19 704 818

## Beschreibung

### Bezug zu verwandten Anmeldungen

Die vorliegende Anmeldung beansprucht die Priorität der deutschen Patentanmeldung 197 48 454.9 vom 03.11.1997, deren Offenbarungsgehalt ausdrücklich auch zum Gegenstand der vorliegenden Erfindung gemacht wird.

### Gebiet der Erfindung

Die Erfindung betrifft eine Einrichtung zur Beeinflussung einer Beleuchtungseinrichtung nach dem Oberbegriff des Anspruches 1.

### Stand der Technik

Derartige Beleuchtungseinrichtungen sind im Stand der Technik vielfach vorgesehen und dienen bei Fahrzeugen z.B. dazu, die Außenbeleuchtung, bestehend aus Front und Heckleuchten, des Fahrzeugs ein- und auszuschalten. Aufgrund der Risiken, die bestehen, wenn bei schlechten Sichtverhältnissen oder im Dämmerlicht ein Fahrzeug ohne Einschalten der Beleuchtung bewegt wird, ist es vielfach erwünscht, daß das Abblendlicht des Fahrzeugs selbsttätig und ohne Zutun des Fahrzeugbenutzers eingeschalten wird.

Hierzu wurde bereits in der DE-37 37 395 A1 und der DE 195 08 184 C2 vorgeschlagen, eine Sensorvorrichtung einzusetzen, die Änderungen im Umgebungslicht erfaßt und in Abhängigkeit von diesen Änderungen die Beleuchtungseinrichtung ein- oder ausschaltet. Dabei wird die Erkenntnis verwendet, daß im Tageslicht Wellenlängen des Lichts enthalten sind, die eindeutig detektiert werden können und die bei Dunkelheit im Umgebungslicht, selbst bei vorliegender Strassenbeleuchtung nicht vorhanden sind. Daher wird in beiden Fällen eine optische Filtereinrichtung eingesetzt, die jedoch stets zusätzlich zum Sensor erforderlich ist und die die Wellenlängen des Tageslichts filtert. Dies erfolgt entweder durch ein vorgeschaltetes Filterglas, das gemäß der DE 37 37 395 A1 ein Spezialglas der Firma Schott, Mainz ist, oder es wird gemäß der DE 195 08 184 C2 ein UV-Filter fest mit dem Helligkeitssensor verbunden oder auf diesen oder dessen Halterung einfach aufgesteckt. Alternativ kann auch eine entsprechende Filterschicht direkt auf den Helligkeitsfilter aufgedampft, aufgespritzt oder aufgestrichen werden. In jedem Fall ist damit ein zusätzlicher Arbeitsgang und eine zusätzliche Filtereinrichtung erforderlich.

Bekanntermaßen haben viele Fahrzeugführer bei Dunkelheit ein eingeschränktes Wahrnehmungsvermögen, das durch Feuchtigkeit oder Benetzung auf der Windschutzscheibe noch verstärkt wird. Insofern wurde bereits in der DE-A 41 34 432 und der DE 196 03 553 C1 vorgeschlagen, einen Niederschlagssensor in Abhängigkeit vom Umgebungslicht zu steuern. Dabei wurde dem optischen Niederschlagssensor entweder eine Fremdlichterfassungseinrichtung zugeordnet oder er wurde selbst als Helligkeitssensor verwendet, indem durch Signalfilterung der Anteil der Umgebungshelligkeit erfaßt und ausgewertet wurde.

### Zusammenfassung der Erfindung

Hiervon ausgehend liegt der vorliegenden Erfindung die Aufgabe zugrunde, eine Einrichtung zu schaffen, die auf einfache und günstige Weise selbsttätig für ein Einschalten des Abblendlichts sorgt.

Diese Aufgabe wird durch die Merkmale des Anspruches 1 gelöst.

Da die Grenze meist z.B. im Bereich des grünen Lichts zwischen Tag- und Nachtunterscheidung liegt, kann eine Filterung dieser im Tageslicht vorhandenen Wellenlängen einfach dadurch durchgeführt werden, daß eine z.B. grüne Leuchtdiode als lichtempfindlicher Detektor geschaltet wird, deren Signale dann zugleich die Steuersignale für die Schalteinrichtung sind, wobei bei entsprechender Anpassung des Belastungswiderstands der Leuchtdiode als vorzugsweise hochohmiger Widerstand eine Reaktion beschränkt auf einen bestimmten Wellenlängenbereich des Lichts, vorzugsweise des grünen Lichts stattfindet.

Die Erkenntnis, daß die Wellenlängen im Bereich des grünen Lichts nur bei Tag auftreten, kann vorteilhafterweise dann auch in Verbindung mit einem Wassersensor eingesetzt werden. Ein derartiger Wassersensor ist z.B. aus dem DE-GM 93 09 837.5 bekannt. Die dort vorgeschlagene optoelektronische Meßanordnung arbeitet mit wenigstens zwei Meßstrecken, deren Signale mit einer Zeitkonstante empfangsseitig auf Null zurückgeführt werden, die kürzer ist als infolge einer Benetzung auftretende Änderungen. Damit kann aufgrund der Erfassung dynamischer Veränderungen eine Scheibenwischersteuerung selbsttätig so betätigt werden, daß eine Betätigung des Scheibenwischers stets dann erfolgt, wenn auch der Fahrzeugbenutzer den Scheibenwischer betätigen würde.

Vorzugsweise arbeitet diese Einrichtung mit sichtbaren roten Leuchtdioden oder im unsichtbaren Infrarotbereich, also deutlich abgesetzt vom für die Abblendlichtschaltung maßgeblichen grünen Lichtbereich. Dadurch können die beiden Sensoren in ein Gehäuse integriert werden, ohne sich gegenseitig zu behindern. Gleichzeitig besteht aber die Möglichkeit, den Sensor für die Tag-/Nachterkennung auch zur Beeinflussung der Scheibenwischersteuerung einzusetzen. Insofern kann ein Niederschlagsensor in Abhängigkeit von den Beleuchtungsverhältnissen beeinflusst werden, also z.B. der Scheibenwischer bei Vorliegen der beiden Bedingungen "Nacht" und "Benetzung" auf der Scheibe öfter wischen als er dies bei Tag tun würde.

### Kurzbeschreibung der Figuren

Im folgenden wird die Erfindung anhand eines Ausführungsbeispiels näher erläutert. Es zeigen:
- Fig. 1: Eine schematische Darstellung der Vorderseite eines Fahrzeugs mit zugehöriger erfindungsgemäßer Einrichtung sowie

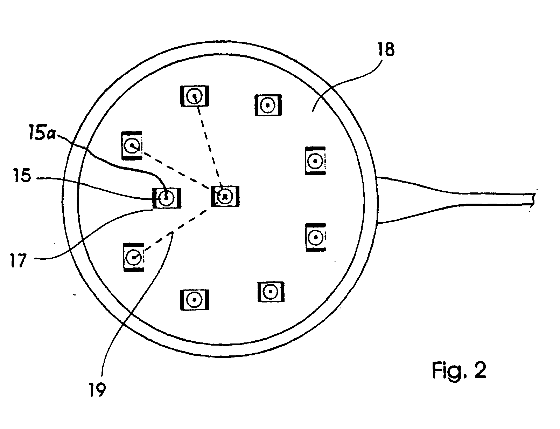

- Fig. 2: eine Ansicht der Sensoreinrichtung von vorn.

### Beschreibung bevorzugter Ausführungsbeispiele

Die Erfindung wird jetzt beispielhaft unter bezug auf die beigefügten Zeichnungen erläutert. Allerdings handelt es sich bei den Ausführungsbeispielen lediglich um Beispiele, die nicht das erfinderische Konzept auf eine bestimmte physikalische Anordnung beschränken sollen.

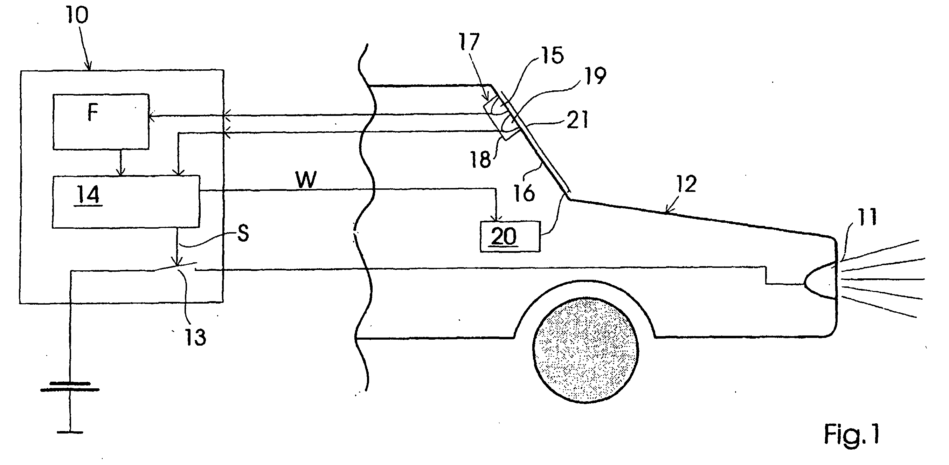

Die Einrichtung dient zur Beeinflussung einer Beleuchtungseinrichtung 11, insbesondere eines Kraftfahrzeugs 12, wie in Figur 1 dargestellt. Es handelt sich dabei um das normale Stand- und Abblendlicht des Fahrzeugs. Üblicherweise wird diese Einrichtung manuell mittels einer Schalteinrichtung 13 zumindest zum Aus- und Einschalten der Beleuchtungseinrichtung 11 vom Fahrer betätigt, sofern sich in den Lichtverhältnissen des Umgebungslichts eine Änderung ergibt.

Die Einrichtung 10 umfaßt wenigstens einen Sensor 17 zur Erfassung der Wellenlänge des Umgebungslichts. Ergänzend ist eine Auswerteeinrichtung 14 vorgesehen, die ein Steuersignal S erzeugt, wenn die vom Sensor 17 erfaßten Wellenlängen des Umgebungslichts Wellenlängen sind, die im wesentlichen im Tageslicht enthalten sind, also vorzugsweise eine Wellenlänge aufweisen, die kürzer ist als die des grünen Lichts. Ergibt sich ein Steuersignal S, so dient dieses zur Betätigung der Schalteinrichtung 13 zum Einschalten der Beleuchtungseinrichtung 11.

Sensor 17 und Auswerteeinrichtung 14 weisen einen Filter F in Form einer Leuchtdiode auf, der im wesentlichen die Wellenlängen filtert, die im Tageslicht enthalten sind. Damit gelangen nur gefilterte Wellenlängen an die Auswerteeinrichtung 14, also Wellenlängen mit einer Wellenlänge, die vorzugsweise kleiner gleich der Wellenlänge des grünen Lichts ist. Es versteht sich jedoch von selbst, daß für die vorliegende Erfindung die Grenze noch weiter in Richtung auf den Wellenbereich des roten Lichts oder in entgegengesetzter Richtung verschoben werden kann. Zur Zeit sind z.B. auch blaue Leuchtdioden in der Entwicklung, die für diesen Einsatzzweck geeignet sind.

Der Filter F und zugleich auch der Sensor 17 werden gemeinsam durch die grüne Leuchtdiode 15 gebildet. Die grüne Leuchtdiode reagiert aufgrund ihres Aufbaus, sofern sie als lichtempfindliches Element beschaltet ist, von selbst nur auf die Wellenlängen des Lichts, die im Tageslicht enthalten sind, und hat damit eine filternde Wirkung. Insofern kann dann die Leuchtdiode 15 selbst bereits die Steuersignale S für die Schalteinrichtung 13 erzeugen.

Man macht sich dabei die Erkenntnis zunutze, daß eine Leuchtdiode Licht nur in einem begrenzten Spektralbereich aufgrund des jeweils für den Kristall der Leuchtdiode verwendeten Materials abstrahlt. Bei einer grünen Leuchtdiode besteht der Kristall z.B. aus Gallium-Arsenit-dotiertem Halbleitermaterial, das im wesentlichen nur auf einer bestimmten Wellenlänge abstrahlt. Wird daher diese Leuchtdiode als Empfangselement beschaltet, macht man sich diese eng begrenzten spektralen Eigenschaften zunutze, so daß die Leuchtdiode nur in einem extrem schmalen Wellenlängenbereich empfängt. Damit kann auf die Verwendung eines zusätzlichen Filters, der gesondert anzubringen oder herzustellen wäre, verzichtet werden. Der Kristall 15a der als Empfänger beschalteten Leuchtdiode 15 ist damit selbst bereits der Filter F. Damit wird nicht nur der Herstellungsprozeß günstiger, zudem kann auf die gegenüber Fotodioden günstigeren Leuchtdioden zurückgegriffen werden, so daß auch hier der Aufwand verringert wird.

Um die so ermittelten Signale nicht nur für das Einschalten des Abblendlichts zu nutzen und um zudem eine kompakte Bauweise zu erzielen, kann der Sensor 17 mit der grünen Leuchtdiode 15 in ein einen Wassersensor 19 umfassendes Gehäuse 18 integriert werden, insbesondere wenn dieser Wassersensor 19 auf optoelektronischem Wege arbeitet, wie dies z.B. in dem DE-GM 93 09 837.5 erläutert ist.

Dadurch, daß dieser Wassersensor 19 den Belag oder die Benetzung einer Fläche wie z.B. der Windschutzscheibe 16 meist im roten oder infraroten Wellenlängenbereich des Lichts erfaßt, können beide Sensoren, also Sensor 17 mit grüner Leuchtdiode 15 und Wassersensor 19 mit roter Leuchtdiode in einem Gehäuse 18 integriert werden und nebeneinander arbeiten, solange sichergestellt ist, daß beide auf unterschiedlichen Wellenlängenbereichen des Lichts arbeiten, die nicht oder nur wenig miteinander interferieren. Im Ausführungsbeispiel arbeitet der Wassersensor im Infrarotbereich, ist ein rotes Licht ausstrahlendes Anzeigeelement vorhanden und die Leuchtdiode 15 reagiert auf grünes Licht. Die Verwendung von Leuchtdioden als Empfangselementen führt aufgrund der eng begrenzten spektralen Eigenschaften dazu, daß verschiedene optische Meßsysteme in einem Gehäuse gemeinsam betrieben werden können, wobei die Empfangselemente selbst die sie jeweils betreffenden Wellenlängenbereiche des Lichts ausfiltern. Dadurch müssen keine gesonderten und voneinander getrennten Meßstrecken vorgesehen werden bzw. die eingehenden Signale nachträglich gefiltert werden. Die Leuchtdioden können bedarfsweise sogar unmittelbar nebeneinander angeordnet werden.

Diese Anordnung hat den Vorteil, daß die Nachtlichterkennung zugleich Signale, gegebenenfalls sogar noch innerhalb des Sensorgehäuses geben kann, die die Steuereinrichtung für den Scheibenwischer 21 beeinflussen. Stellt der Sensor S im wesentlichen keine Wellenlänge des Tageslichts mehr fest, kann das Steuersignal S zugleich ein Signal W an die Steuereinrichtung 20 für den Scheibenwischer 21 geben, der in Abhängigkeit der vom Wassersensor 19 erfaßten Benetzung betrieben ist. Dies geschieht üblicherweise dann, wenn zugleich "Nacht" und "Benetzung" detektiert werden. Liegen beide Bedingungen vor, so kann die Steuereinrichtung 20 den Scheibenwischer 21 z.B. mit einer höheren Frequenz betätigen als dies im Tagesbetrieb erfolgen würde.

Es versteht sich von selbst, daß diese Beschreibung verschiedensten Modifikationen, Änderungen und Anpassungen unterworfen werden kann, die sich im Bereich von Äquivalenten zu den anhängenden Ansprüchen bewegen.

## Patentansprüche

1. Einrichtung (10) zur Beeinflussung einer Beleuchtungseinrichtung (11) eines Kraftfahrzeugs (12) in Abhängigkeit des Umgebungslichts mit
- einer Schalteinrichtung (13) zumindest zum Aus- und Einschalten der Beleuchtungseinrichtung (11),
- wenigstens einem optischen Sensor (17) zur Erfassung der Wellenlänge des Umgebungslichts,
- einer Auswerteeinrichtung (14) zur Erzeugung eines Steuersignals (S), wenn die vom Sensor (17) erfaßten Wellenlängen des Umgebungslichts Wellenlängen sind, die im wesentlichen im Tageslicht enthalten sind,
- wobei das Steuersignal (S) die Schalteinrichtung (13) zum Schalten der Beleuchtungseinrichtung (11) betätigt,
- einem Filter (F), der im wesentlichen die Wellenlängen des Lichts filtert, die im Tageslicht enthalten sind,
**dadurch gekennzeichnet, daß** Filter (F) und Sensor (17) gemeinsam durch wenigstens eine Leuchtdiode (15) gebildet sind, die als lichtempfindliches Element beschaltet ist.

2. Einrichtung nach Anspruch 1, **dadurch gekennzeichnet, daß** das Material des Kristalls (15a) der Leuchtdiode (15) für Wellenlängen des Lichts in dem Bereich als Filter (F) durchlässig ist, in dem die Leuchtdiode bei Beschaltung als lichtaussendendes Element Licht aussendet.

3. Einrichtung nach Anspruch 1, **dadurch gekennzeichnet, daß** die Leuchtdiode (15) eine grüne oder blaue Leuchtdiode ist.

4. Einrichtung nach Anspruch 1, **dadurch gekennzeichnet, daß** der Sensor (17) in ein einen Wassersensor (19) umfassendes Gehäuse (18) integriert ist, der auf optoelektronischem Wege die Benetzung oder den Belag einer Fläche wie z.B. einer Windschutzscheibe (16) erfaßt, wobei der Sensor (17) und der Wassersensor (19) auf unterschiedlichen Wellenlängenbereichen des Lichts arbeiten, die nicht oder nur wenig miteinander interferieren.

5. Einrichtung nach Anspruch 4, **dadurch gekennzeichnet, daß** wenn der Sensor (S) im wesentlichen keine Wellenlänge des Tageslichts ermittelt, das Steuersignal zugleich ein Signal (W) an die Steuereinrichtung (20) für den Scheibenwischer (21) gibt, der in Abhängigkeit vom Wassersensor (19) erfaßten Benetzung betrieben ist.

## Claims

1. A device for influencing a lighting installation (11) of a vehicle (12) as a function of ambient light, comprising
- a switchgear (13) at least for turning on and turning off the lighting installation (11),
- at least one optical sensor (17) for detecting a wavelength of ambient light,
- an evaluation device (14) for producing a control signal (S) if the wavelengths of ambient light detected by the sensor (17) are wavelengths which are essentially contained in daylight,
- with the control signal (S) actuating the switchgear (13) for switching the lighting installation (11),
- a filter (F) that essentially filters the wavelengths of light that are contained in daylight, **characterized in that** filter (F) and the sensor (17) are formed jointly by means of at least one LED (15) which is interconnected as a light-sensitive element.

2. The device of claim 1, **characterized in that** the material of the crystal (15a) of the LED (15) is transmissive, as the filter (F), to wavelengths of light in the region in which the LED emits light when used as light emitting element.

3. The device of claim 1, **characterized in that** the LED (15) is a green LED or a blue LED.

4. The device of claim 1, **characterized in that** the sensor (17) is integrated in a housing (18) which includes a water sensor (19) which opto-electronically detects the moisture or the deposit on a surface, e.g. on a windshield (16), with the sensor (17) and the water sensor (19) operating on different optical wavelength regions, which do not or do not substantially interfere with each other.

5. The device of claim 4, **characterized in that** if the sensor (S) essentially detects no wavelength of daylight, the control signal simultaneously transmits a signal (W) to a control device (20) for a windshield wiper (21), which is actuated as a function of the moisture detected by the water sensor (19).

## Revendications

1. Dispositif (10) pour influer sur un appareil d'éclairage (11) d'un véhicule automobile (12) en fonction de la lumière ambiante comprenant
- un dispositif de commutation (13) au moins pour l'extinction et l'allumage de l'appareil d'éclairage (11),
- au moins un capteur (17) optique pour l'enregistrement de la longueur d'onde de la lumière ambiante,
- un appareil d'analyse (14) pour générer un signal de commande (S) lorsque les longueurs d'onde, enregistrées par le capteur (17), de la lumière ambiante, sont des longueurs d'onde qui sont sensiblement incluses dans la lumière du jour,
- le signal de commande (S) actionnant le dispositif de commutation (13) pour la commutation de l'appareil d'éclairage (11),
- un filtre (F) qui filtre essentiellement les longueurs d'onde de la lumière, qui sont incluses dans la lumière du jour,
**caractérisé en ce que** le filtre (F) et le capteur (17) sont formés conjointement par au moins une diode électroluminescente (15), qui est câblée comme un élément sensible à la lumière.

2. Dispositif selon la revendication 1, **caractérisé en ce que** le matériau du cristal (15a) de la diode électroluminescente (15) est perméable en tant que filtre (F) pour les longueurs d'onde de la lumière dans la plage où la diode électroluminescente émet de la lumière en étant câblée comme élément émettant de la lumière.

3. Dispositif selon la revendication 1, **caractérisé en ce que** la diode électroluminescente (15) est une diode électroluminescente verte ou bleue.

4. Dispositif selon la revendication 1, **caractérisé en ce que** le capteur (17) est intégré dans un boîtier (18) comprenant un capteur d'eau (19), qui enregistre par voie optoélectronique l'humectage ou le revêtement d'une surface, par exemple d'un pare-brise (16), le capteur (17) et le capteur d'eau (19) travaillant dans des plages différentes de longueurs d'onde de la lumière, qui n'interfèrent pas ou interfèrent seulement peu entre elles.

5. Dispositif selon la revendication 4, **caractérisé en ce que**, lorsque le capteur (S) ne détermine pratiquement pas de longueur d'onde de la lumière du jour, le signal de commande envoie en même temps un signal (W) au dispositif de commande (20) pour l'essuie-glace (21), qui est utilisé en fonction de l'humectage enregistré par le capteur d'eau (19).
